# EUROPÄISCHE PATENTSCHRIFT

(11) **EP 1 470 560 B1**
(45) Veröffentlichungstag und Bekanntmachung des Hinweises auf die Patenterteilung: **28.06.2006**
(21) Anmeldenummer: 03708050.4
(22) Anmeldetag: 09.01.2003
(51) Int. Cl.: H01G 4/14

(54) **VERWENDUNG VON KUNSTSTOFFFOLIEN ALS DIELEKTRIKUM IN KONDENSATOREN**
USE OF PLASTIC FILMS AS DIELECTRIC IN CAPACITORS
UTILISATION DE FILMS EN PLASTIQUE COMME DIELECTRIQUE DANS DES CONDENSATEURS

(30) Priorität: 18.01.2002 DE 10201761
(43) Veröffentlichungstag der Anmeldung: 27.10.2004
(73) Patentinhaber: Bayer MaterialScience AG, 51368 Leverkusen (DE)
(72) Erfinder: WEBER, Hans-Leo, 41569 Rommerskirchen (DE); MEYER, Klaus, 41539 Dormagen (DE); BIER, Peter, 47800 Krefeld (DE)
(86) Internationale Anmeldenummer: PCT/EP2003/000138
(87) Internationale Veröffentlichungsnummer: WO 2003/060936

(56) Entgegenhaltungen:
- EP-A- 0 359 953
- WO-A-01/38076
- DE-A- 3 436 122
- DE-B- 1 764 859
- GB-A- 952 905
- US-B1- 6 214 422

## Beschreibung

Die Erfindung betrifft die Verwendung von Folien als Dielektrikum in Kondensatoren mit Selbstheilungseigenschaft.

Die Verwendung von Folie, insbesondere Kunststofffolie, als Dielektrikum in elektrischen Kondensatoren ist bekannt. Solche Kondensatoren werden nach zwei Bauformen unterschieden.

Als erste Bauform ist die Film-/Folientechnologie anzusehen. Kondensatoren dieser Bauart enthalten Kunststofffolien als Dielektrikum und Metallfolien als Elektroden.

Bei der zweiten Bauform wird von metallisierten Kunststofffolienkondensatoren gesprochen. Sie enthalten eine als Dielektrikum dienende Kunststofffolie, auf die metallisch leitende Schichten als Elektroden aufgedampft werden. Als Metall wird dabei vorzugsweise Aluminium mit Schichtdicken kleiner 10⁻⁷ m (0,1 µm) verwendet.

Das wichtigste Unterscheidungsmerkmal dieser beiden Kondensatorbauformen ist das Verhalten des Kondensators beim elektrischen Durchschlag. Hierunter wird verstanden, dass das - grundsätzlich isolierende - Dielektrikum von den elektrischen Ladungen durchschritten werden kann und ein Kurzschluss entsteht. Als Entstehensgrund für einen Durchschlag können nicht zu vermeidende Fehlstellen im Dielektrikum genannt werden. Bei der ersten Bauform führt dieser Kurzschluss zum Ausfall des Kondensators.

Die zweite Bauform wird als "selbstheilend" bezeichnet. Bei einem elektrischen Durchschlag durch das Dielektrikum verdampfen in Folge der hohen Lichtbogentemperatur die aufgedampften Metallbeläge in der Umgebung der Durchschlagstelle.

Die Kurzschlussursache wird förmlich weggebrannt. Bei einem elektrischen Durchschlag entsteht aus dem Dielektrikum ein hochkomprimiertes Plasma, das die Dielektrikumlagen auseinander drückt. Es bilden sich isolierende Höfe um den Durchschlagkanal. Der Kondensator bleibt funktionsfähig.

Selbstheilende Kondensatoren werden aus Polyethylentherephthalat-(PET)-, Polypropylen-(PP-), Polycarbonat-(PC)- und Polyphenylensulfid-(PPS-)-folien hergestellt. Bei allen genannten Folien handelt es sich um teilkristalline Kunststoffe.

Nachteilig an teilkristallinem Kunststoff ist der erhöhte Herstellungsaufwand. Die teilkristallinen Kunststoffe, die zur Herstellung von Folien für den Einsatz als Dielektrikum in Kondensatoren (mit Selbstheilungseigenschaft) verwendet werden können, müssen einen Kristallinitätsgrad ≥ 10 % aufweisen, damit Selbstheilung beobachtet werden kann.

Günstiger herstellen ließen sich Folien aus amorphem Kunststoff. Allerdings sind bisher bei Kondensatoren, die als Dielektrikum eine Folie aus amorphem Kunststoff besitzen, keine Selbstheilungseigenschaften beobachtet worden.

Eine weitere Unterscheidung von Kondensatoren wird nach der Art der Montage auf einer Leiterplatte vorgenommen. Dabei wird zwischen Kondensatoren für die Durchsteckmontage und Kondensatoren für SMD-(Surface-Mounted-Device)-Anwendungen unterschieden. Kondensatoren für die Durchsteckmontage sind mit Anschlussdrähten versehen. Die Kondensatoren werden auf die Oberseite der Platine aufgesetzt. Die Anschlussdrähte ragen durch die Platine hindurch auf die Leiterbahnseite und werden dort mit den Leiterbahnen verlötet.

Im Gegensatz dazu werden SMD-Bauelemente direkt auf der Leiterbahnseite der Platine befestigt und verlötet. Dabei werden sie für einige Sekunden der Lötwärme ausgesetzt, was besondere Anforderungen an die Wärmeformbeständigkeit der Dielektrikumsfolie stellt.

Gemäß EP-B 1 0 359 953 ist bekannt, Polycarbonatfolien durch Vergießen einer mit einem geeigneten Lösungsmittel bereiteten Polycarbonatlösung auf einer ebenen Unterlage mit anschließendem Verdampfen des Lösungsmittels und Abheben der gebildeten Folie von der Unterlage herzustellen. Die so hergestellte Folie kann im Anschluss mono- oder biaxial gereckt werden. Aus dieser Patentschrift ist ebenfalls bekannt, Polycarbonate als Elektroisolierstoffe für elektrische Leiter zu verwenden.

In einem anderen bekannten Stand der Technik wird Makrofol KG® als Kunststofffolie für den Einsatz als Dielektrikum in Kondensatoren verwendet. Es handelt sich dabei um eine teilkristallinisierte, längsgereckte Gießfolie aus hochmolekularem Polycarbonat, bestehend aus Bisphenol-A-Homopolycarbonat, mit einer Dicke von 2·10⁻⁶ m bis 6·10⁻⁵m (2 bis 60 µm). Metallisierte Folienkondensatoren mit einem Dielektrikum aus Makrofol KG® weisen selbstheilende Eigenschaften auf, wenn eine Schichtdicke von maximal 1,2 · 10⁻⁵ m (12 µm) eingehalten wird.

Dielektrika, die aus Kunststoffen wie Makrofol KG® bestehen, sind verbesserungswürdig. Die Herstellung der Folie aus Makrofol KG® ist aufwendig, da es nach seinem Lösen einem aufwendigen Filtrationsprozess unterzogen werden muss. Des Weiteren bringen die Temperaturgrenzen für Dauerbelastung und Wärmeformbeständigkeit Probleme mit sich. Im Dauerbetrieb lassen sich Kondensatoren mit einer metallisierten Kunststofffolie aus Makrofol KG® in Temperaturbereichen bis 120°C betreiben. Dieses limitiert beispielsweise den Einsatz in heißen Motorenräumen. Die Wärmeformbeständigkeitsgrenze von 140°C bringt Probleme beim Heißlöten von SMD-Kondensatoren mit sich.

Der Erfindung liegt daher die Aufgabe zugrunde, eine Folie als Dielektrikum zum Einsatz in Kondensatoren mit Selbstheilungseigenschaft bereitzustellen, mit der es möglich ist, die Kondensatoren in einem höheren Temperaturbereich einzusetzen und im SMD-Verfahren zu verarbeiten. Dabei soll die Folie kostengünstiger herzustellen sein.

Diese Aufgabe wird hinsichtlich der Folie dadurch gelöst, dass die Folie aus einem amorphen Polycarbonat besteht. Es ist erkannt worden, dass es überraschender Weise möglich ist, anstelle von teilkristallinem Kunststoff eine Folie aus amorphem Polycarbonat als Dielektrikum in Kondensatoren einzusetzen, die trotzdem Selbstheilungseigenschaft aufweisen. Polycarbonate besitzen zudem eine höhere Wärmeformbeständigkeit.

Gegenstand der vorliegenden Erfindung ist daher die Verwendung einer Folie aus einem amorphen Polycarbonat auf Basis von 1,1-Bis-(4-hydroxyphenyl)-3,3,5-trimethylcyclohexan mit einer Stärke von 10⁻⁷ bis 10⁻⁴ m als Dielektrikum in Kondensatoren mit Selbstheilungseigenschaft, wobei als Polycarbonat ein hochmolekulares, thermoplastisches, aromatisches Polycarbonat mit einem durchschnittlichen M_{w} von mindestens 10 000 und mit einer Glastemperatur von mindestens 160°C verwendet wird.

Als Ausgangsprodukte für die Polycarbonate werden Dihydroxydiphenylcycloalkane der Formel (Ia) verwendet 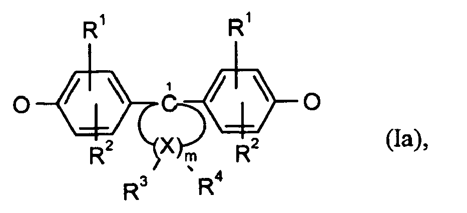 worin
- R¹, R²: unabhängig voneinander Wasserstoff, Halogen, bevorzugt Chlor oder Brom, C₁-C₈-Alkyl, C₅-C₆-Cycloalkyl, C₆-C₁₀-Aryl, bevorzugt Phenyl, und C₇₋C₁₂-Aralkyl, bevorzugt Phenyl-C₁-C₄-Alkyl, insbesondere Benzyl,
- m: eine ganze Zahl von 4 bis 7, bevorzugt 4 oder 5,
- R³ und R⁴: für jedes X individuell wählbar, unabhängig voneinander Wasserstoff oder C₁-C₆-Alkyl und
- X: Kohlenstoff bedeuten,
mit der Maßgabe, dass an mindestens einem Atom X R³ und R⁴ gleichzeitig Alkyl bedeuten.

Bevorzugt sind an 1-2 Atomen X, insbesondere nur an einem Atom X, R³ und R⁴ gleichzeitig Alkyl.

Bevorzugter Alkylrest ist Methyl; die Atome in α-Stellung zu dem Diphenyl-substituierten C-Atom (C-1) sind bevorzugt nicht dialkylsubstituiert, dagegen ist die Alkyldisubstitution in β-Stellung zu C-1 bevorzugt.

Bevorzugt sind Dihydroxydiphenylcycloalkane mit 5 und 6 Ring-C-Atomen im cycloaliphatischen Rest (m = 4 oder 5 in Formel (Ia)), beispielsweise die Diphenole der Formeln (Ib) bis (Id), 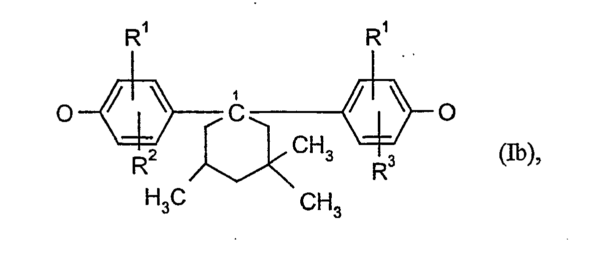 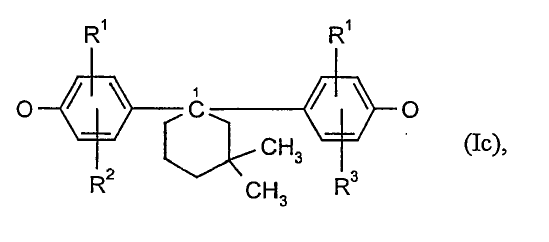 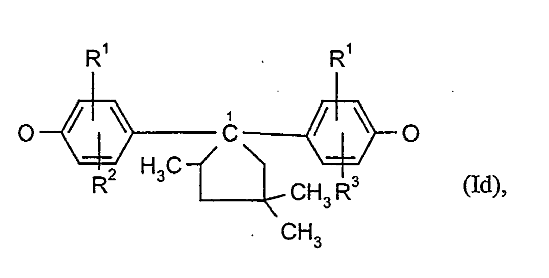 wobei das 1,1-Bis-(4-hydroxyphenyl)-3,3,5-trimethylcyclohexan (Formel (Ib) mit R¹ und R² gleich H) besonders bevorzugt ist. Die Polycarbonate können gemäß EP 359 953 A1 aus Diphenolen der Formel (Ia) hergestellt werden.

Es können sowohl ein Diphenol der Formel (Ia) unter Bildung von Homopolycarbonaten als auch mehrere Diphenole der Formel (Ia) unter Bildung von Copolycarbonaten verwendet werden.

Außerdem können die Diphenole der Formel (Ia) auch im Gemisch mit anderen Diphenolen, beispielsweise mit denen der Formel (Ie)

HO-Z-OH (Ie),

zur Herstellung von hochmolekularen, thermoplastischen, aromatischen Polycarbonaten verwendet werden.

Geeignete andere Diphenole der Formel (Ie) sind solche, in denen Z ein aromatischer Rest mit 6 bis 30 C-Atomen ist, der einen oder mehrere aromatische Kerne enthalten kann, substituiert sein kann und aliphatische Reste oder andere cycloaliphatische Reste als die der Formel (Ia) oder Heteroatome als Brückenglieder enthalten kann.

Beispiele der Diphenole der Formel (Ie) sind:
Hydrochinon, Resorcin, Dihydroxydiphenyle, Bi-(hydroxyphenyl)-alkane, Bis-(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, α,α'-Bis-(hydroxyphenyl)-diisopropylbenzole sowie deren kemalkylierte und kernhalogenierte Verbindungen.

Diese und weitere geeignete Diphenole sind z.B. in den US-A 3 028 365, 2 999 835, 3 148 172, 3 275 601, 2 991 273, 3 271 367, 3 062 781, 2 970 131 und 2 999 846, in den DE-A 1 570 703, 2 063 050, 2 063 052, 2 211 956, der Fr-A 1 561 518 und in der Monographie "H. Schnell, Chemistry and Physics of Polycarbonates, Interscience Publishers, New York 1964", beschrieben.

Bevorzugte andere Diphenole sind beispielsweise:
4,4'-Dihydroxydiphenyl, 2,2-Bis-(4-hydroxyphenyl)-propan, 2,4-Bis-(4-hydroxyphenyl)-2-methylbutan, 1,1-Bis-(4-hydroxyphenyl)-cyclohexan, a,a-Bis-(4-hydroxyphenyl)-p-diisopropylbenzol, 2,2-Bis-(3-methyl-4-hydroxyphenyl)-propan, 2,2-Bis-(3-chlor-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,1-Bis-(3,5-dimethyl-4-hydroxyphenyl)-cyclohexan, α,α-Bis-(3,5-dimethyl-4-hydroxyphenyl)-p-diisopropylbenzol, 2,2-Bis-(3,5-dichlor-4-hydroxyphenyl)-propan und 2,2-Bis-(3,5-dibrom-4-hydroxyphenyl)-propan.

Besonders bevorzugte Diphenole der Formel (Ie) sind beispielsweise:
2,2-Bis-(4-hydroxyphenyl)-propan, 2,2-Bis-(3,5-dimethyl-4-hydroxyphenyl)-propan, 2,2-Bis-(3,5-dichlor-4-hydroxyphenyl)-propan, 2,2-Bis-(3,5-dibrom-4-hydroxyphenyl)-propan und 1,1-Bis-(4-hydroxyphenyl)-cyclohexan.

Insbesondere ist 2,2-Bis-(4-hydroxyphenyl)-propan bevorzugt. Die anderen Diphenole können sowohl einzeln als auch im Gemisch eingesetzt werden.

Das molare Verhältnis von Diphenolen der Formel (Ia) zu den gegebenenfalls mitzuverwendenden anderen Diphenolen der Formel (Ie), soll zwischen 100 mol-% (Ia) zu 0 mol-% (Ie) und 2 mol-% (Ia) zu 98 mol-% (Ie), vorzugsweise zwischen 100 mol-% (Ia) zu 0 mol-% (Ie) und 10 mol-% (Ia) zu 90 mol-% (Ie) und insbesondere zwischen 100 mol-% (Ia) zu 0 mol-% (Ie) und 30 mol-% (Ia) zu 70 mol-% (Ie) und ganz besonders zwischen 100 mol-% (Ia) zu 0 mol-% (Ie) und 50 mol-% (Ia) zu 50 mol-% (Ie) liegen.

Die hochmolekularen Polycarbonate aus den Diphenolen der Formel (Ia), gegebenenfalls in Kombination mit anderen Diphenolen, können nach den bekannten Polycarbonat-Herstellungsverfahren hergestellt werden. Dabei können die verschiedenen Diphenole sowohl statistisch als auch blockweise miteinander verknüpft sein.

Die erfindungsgemäßen Polycarboante können in an sich bekannter Weise verzweigt sein. Wenn die Verzweigung gewünscht wird, kann sich in bekannter Weise durch Einkondensieren geringer Mengen, vorzugsweise Mengen zwischen 0,05 und 2,0 mol-% (bezogen auf eingesetzte Diphenole), an drei- oder mehr als dreifunktionellen Verbindungen, insbesondere solchen mit drei oder mehr als drei phenolischen Hydroxylgruppen, erreicht werden. Einige Verzweiger mit drei oder mehr als drei phenolischen Hydroxylgruppen sind:
Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis-[4,4-bis-(4-hydroxyphenyl)-cyclohexyl]-propan, 2,4-Bis-(4-hydroxyphenyl-isopropyl)-phenol, 2,6-is-(2-hydroxy-5-methyl-benzyl)-4-methylphenol, 2-(4-hydroxyphenyl)-2-(2,4-dihydroxyphenyl)-propan, Hexa-[4-(4-hydroxyphenyl-isopropyl)-phenyl]-orthoterephthalsäureester, Tetra-(4-hydroxyphenyl)-methan, Tetra-[4-(4-hydroxyphenyl-isopropyl)phenoxy]-methan und 1,4-Bis-[4',4"-dihydroxytriphenyl)-methyl]-benzol.

Einige der sonstigen dreifunktionellen Verbindungen sind 2,4-Dihydroxybenzoesäure, Trimesinsäure, Cyanurchlorid und 3,3-Bis-(3-methyl-4-hydroxyphenyl)-2-oxo-2,3-dihydroindol.

Als Kettenabbrecher zur an sich bekannten Regelung des Molekulargewichts der Polycarbonate dienen monofunktionelle Verbindungen in üblichen Konzentraten. Geeignete Verbindungen sind z.B. Phenol, tert.-Butylphenole oder andere Alkyl-substituierte Phenole. Zur Regelung des Molekulargewichts sind insbesondere kleine Mengen Phenole der Formel (If) geeignet 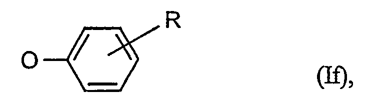 worin
- R: einen verzweigten C₈- und/oder C₉-Alkylrest darstellt.

Bevorzugt ist im Alkykest R der Anteil an CH₃-Protonen zwischen 47 und 89 % und der Anteil der CH- und CH₂-Protonen zwischen 53 und 11 %; ebenfalls bevorzugt ist R in o- und/oder p-Stellung zur OH-Gruppe, und besonders bevorzugt die obere Grenze des ortho-Anteils 20 %. Die Kettenabbrecher werden im allgemeinen in Mengen von 0,5 bis 10, bevorzugt 1,5 bis 8 mol-%, bezogen auf eingesetzte Diphenole, eingesetzt.

Die Polycarbonate können vorzugsweise nach dem Phasengrenzflächenverhalten (vgl. H. Schnell "Chemistry and Physics of Polycarbonates", Polymer Reviews, Vol. IX, Seite 33ff., Interscience Publ. 1964) in an sich bekannter Weise hergestellt werden.

Hierbei werden die Diphenole der Formel (Ia) in wässrig alkalischer Phase gelöst. Zur Herstellung von Copolycarbonaten mit anderen Diphenolen werden Gemische von Diphenolen der Formel (Ia) und den anderen Diphenolen, beispielsweise denen der Formel (Ie), eingesetzt. Zur Regulierung des Molekulargewichts können Kettenabbrecher z.B. der Formel (If) zugegeben werden. Dann wird in Gegenwart einer inerten, vorzugsweise Polycarbonat lösenden, organischen Phase mit Phosgen nach der Methode der Phasengrenzflächenkondensation umgesetzt. Die Reaktionstemperatur liegt zwischen 0°C und 40°C.

Die gegebenenfalls mitverwendeten Verzweiger (bevorzugt 0,05 bis 2,0 mol-%) können entweder mit den Diphenolen in der wässrig alkalischen Phase vorgelegt werden oder in dem organischen Lösungsmittel gelöst vor Phosgenierung zugegeben werden. Neben den Diphenolen der Formel (Ia) und gegebenenfalls anderen Diphenolen (Ie) können auch deren Mono- und/oder Bis-chlorkohlensäureester mitverwendet werden, wobei diese in organischen Lösungsmitteln gelöst zugegeben werden. Die Menge an Kettenabbrechern sowie an Verzweigern richtet sich dann nach der molaren Menge von Diphenolat-Resten entsprechend Formel (Ia) und gegebenenfalls Formel (Ie); bei Mitverwendung von Chlorkohlensäureestern kann die Phosgenmenge in bekannter Weise entsprechend reduziert werden.

Geeignete organische Lösungsmittel für die Kettenabbrecher sowie gegebenenfalls für die Verzweiger und die Chlorkohlensäureester sind beispielsweise Methylenchlorid, Chlorbenzol, insbesondere Mischungen aus Methylenchlorid und Chlorbenzol. Gegebenenfalls können die verwendeten Kettenabbrecher und Verzweiger im gleichen Solvens gelöst werden.

Als organische Phase für die Phasengrenzflächenpolykondensation dient beispielsweise Methylenchlorid, Chlorbenzol sowie Mischungen aus Methylenchlorid und Chlorbenzol.

Als wässrige alkalische Phase dient beispielsweise NaOH-Lösung. Die Herstellung der Polycarbonate nach dem Phasengrenzflächenverfahren kann in üblicher Weise durch Katalysatoren wie tertiäre Amine, insbesondere tertiäre aliphatische Amine wie Tributylamin oder Triethylamin katalysiert werden; die Katalysatoren können in Mengen von 0,05 bis 10 mol-%, bezogen auf Mole an eingesetzten Diphenolen, eingesetzt werden. Die Katalysatoren können vor Beginn der Phosgenierung oder während oder auch nach der Phosgenierung zugesetzt werden.

Die Polycarbonate können nach dem bekannten Verfahren in homogener Phase, dem sogenannten "Pyridinverfahren" sowie nach dem bekannten Schmelzeumesterungsverfahren unter Verwendung von beispielsweise Diphenylcarbonat anstelle von Phosgen hergestellt werden.

Die Polycarbonate haben bevorzugt Molekulargewicht _{W} (Gewichtsmittel, ermittelt durch Gelchromatographie nach vorheriger Eichung) von mindestens 10 000, besonders bevorzugt von 20 000 bis 300 000 und insbesondere von 20 000 bis 80 000. Sie können linear oder verzweigt sein, sie sind Homopolycarbonate oder Copolycarbonate auf Basis der Diphenole der Formel (Ia).

Durch den Einbau der Diphenole der Formel (Ia) sind neue Polycarbonate mit hoher Wärmeformbeständigkeit entstanden, die auch sonst ein gutes Eigenschaftsbild haben. Dies gilt insbesondere für die Polycarbonate auf Basis der Diphenole der Formel (Ia), in denen m 4 oder 5 ist und ganz besonders für die Polycarbonate auf Basis der Diphenole (Ib), worin R¹ und R² unabhängig voneinander die für die Formel (Ia) genannte Bedeutung haben und besonders bevorzugt Wasserstoff sind.

Die besonders bevorzugten Polycarbonate sind also solche, in denen Struktureinheiten der Formel (I) m = 4 oder 5 ist ganz besonders solche aus Einheiten der Formel (Ig) 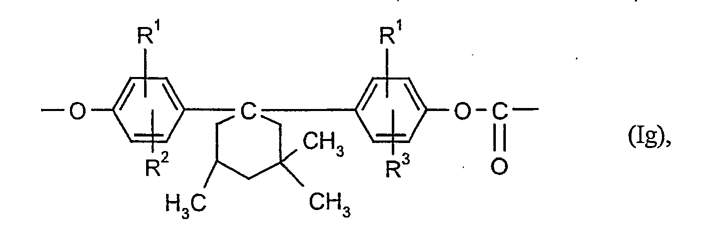 worin R¹ und R² die für Formel (I) genannte Bedeutung haben, besonders bevorzugt aber Wasserstoff sind.

Diese Polycarbonate auf Basis der Diphenole der Formel (Ib), worin insbesondere R¹ und R² Wasserstoff sind, besitzen zur hohen Wärmeformbeständigkeit außerdem eine gute UV-Stabilität und ein gutes Fließverhalten in der Schmelze, was nicht zu erwarten war.

Durch die beliebige Komposition mit anderen Diphenolen, insbesondere mit denen der Formel (Ie) lassen sich zudem die Polycarbonateigenschaften in günstiger Weise variieren. In solchen Copolycarbonaten sind die Diphenole der Formel (Ia) in Mengen von 100 mol-% bis 2 mol-%, vorzugsweise in Mengen von 100 mol-% bis 10 mol-% und insbesondere in Mengen von 100 mol-% bis 30 mol-% und ganz besonders von 100 mol-% bis 50 mol-%, bezogen auf die Gesamtmenge von 100 mol-% an Diphenoleinheiten, in Polycarbonaten enthalten.

Es hat sich gezeigt, dass derartige Polycarbonate eine besonders hohe Wärmeformbeständigkeit aufweisen, bei gleichzeitigem Erhalt der Selbstheilungseigenschaft.

Gemäß einer weiteren Lehre der Erfindung sollte die Stärke des Dielektrikums vorzugsweise 10⁻⁷ bis 10⁻⁴m (0,1 bis 100 µm) betragen. Eine Ausgestaltung der Erfindung sieht dabei einen Bereich von 5· 10⁻⁷ m bis 2· 10⁻⁵m (0,5 bis 20 µm) und eine weitere Ausgestaltung der Erfindung einen Bereich von 1,2·10⁻⁶ m bis 8·10⁻⁶m (1,2 bis 8 µm) vor.

Hinsichtlich des Verfahrens zur Herstellung einer vorab beschriebenen Folie wird die Aufgabe erfindungsgemäß nach einer ersten Alternative dadurch gelöst, dass der durch ein Lösungsmittel gelöste Kunststoff auf einer Trommelgießmaschine vergossen wird. Die so entstehende Folie kann falls erforderlich nach dem Vergießen gereckt werden. Eine zweite Alternative, der erfindungsgemäßen Lösung hinsichtlich des Verfahrens zur Herstellung einer vorab beschriebenen Folie sieht vor, dass der durch ein Lösungsmittel gelöste Kunststoff im Tiefdruckverfahren auf ein Trägermedium aufgetragen wird.

Für beide Verfahrensalternativen kann als Kunststoff ein amorphes Polycarbonat verwendet werden, In einer bevorzugten Ausgestaltung beider Verfahrensalternativen ist vorgesehen, dass ein hochmolekulares, thermoplastisches, aromatisches Polycarbonat mit einem durchschnittlichen Molekulargewicht M_{w} von mindestens 10 000 bis bevorzugt 60 000, besonders bevorzugt 25 000 bis 40 000, verwendet wird. Auf grund der geringeren Viskosität lassen sich die nachfolgenden Herstellungsprozesse kostengünstiger durchführen. Des weiteren können in beiden Fällen Methylenchlorid oder Butanon als Lösungsmittel verwendet werden.

Gemäß einer weiteren Ausgestaltung der zweiten Verfahrensalternative der Erfindung kann als Trägermedium entweder PET-Folie oder Papier verwendet werden. Des weiteren kann die Folie vor dem Weiterverarbeiten von dem Trägermedium gelöst werden.

Die Erfindung wird nachfolgend anhand eines lediglich ein bevorzugtes Ausführungsbeispiel darstellenden Beispiels näher erläutert. Aus dem Copolycarbonat (Apec® KU 1-9203 der Bayer AG) aus 45 mol-% BPA und 55 mol-% aus Dihydroxydiphenylcycloalkan der Formel (Ib) (mit R¹ und R² gleich H) (Bisphenol TMC) wird durch Lösen im Methylenchlorid eine ca. 10 %ige Lösung hergestellt. Alternativ kann zur Lösung Butanon verwendet werden. Im Anschluss daran wird durch Vergießen auf einer Trommelgießmaschine eine 7 · 10⁻⁶ m (7 µm) dicke Folie hergestellt. Diese Folie wird auf einer Reckmaschine durch Längsreckung zu einer 5 · 10⁻⁶ m (5 µm) dicken Folie verstreckt.

Das Herstellen der Kondensatoren erfolgt durch Konfektionierung der Folie und Aufinetallisieren von elektrisch leitfähigen Belägen auf die Folie.

Die so hergestellten Kondensatoren werden anschließend zum Nachweis der Selbstheilungseigenschaft einer Spannungsprüfung unterzogen. Dabei wird die Spannung so gewählt, dass an elektrischen Schwachstellen elektrische Durchschläge auftreten. Anschließend wird der elektrische Widerstand des Kondensators gemessen und das Produkt aus der Kapazität des Kondensators in µF und dem elektrischen Widerstand in MΩ gebildet. Kondensatoren gelten als selbstheilend, wenn der so berechnete Wert größer als 5 000 s ist.

Überraschend und für den Fachmann nicht vorhersehbar erfüllen die mit einer Folie als Dielektrikum aus dem amorphen Copolycarbonat APEC® hergestellten Kondensatoren die oben genannte Bedingung, obwohl Kondensatoren mit einer Folie aus amorphem Bisphenol-A-Homopolycarbonat, die oben genannten Bedingung nicht erfüllen.

Vorteilhaft beim Einsatz von APEC® zur Herstellung der Kunststofffolie ist, dass sich die Folie leichter herstellen lässt, APEC® im Gegensatz zu Makrofol KG® leichter löslich ist und die Lösung eine unbegrenzte Standfestigkeit ("pot life") aufweist, was zu einer langen Aufbewahrungsmöglichkeit der Lösung führt. Die Lösungsstandfestigkeit von Makrofol KG® beschränkt sich auf wenige Tage. Des weiteren ist APEC® besser vergießbar, da homogenere Bereich entstehen. APEC® weist eine höhere Wärmeformbeständigkeit als Bisphenol-A-Homopolycarbonat auf.

## Patentansprüche

1. Verwendung einer Folie aus einem amorphen Polycarbonat auf Basis von 1,1-Bis-(4-hydroxyphenyl)-3,3,5-trimethylcyclohexan mit einer Stärke von 10⁻⁷ bis 10⁻⁴ m als Dielektrikum in Kondensatoren mit Selbstheilungseigenschaft, wobei als Polycarbonat ein hochmolekulares, thermoplastisches, aromatisches Polycarbonat mit einem durchschnittlichen M_{w} von mindestens 10 000 und mit einer Glastemperatur von mindestens 160°C verwendet wird.

## Claims

1. Use of a film consisting of an amorphous polycarbonate based on 1,1-bis-(4-hydroxyphenyl)-3,3,5-trimethylcyclohexane with a thickness of 10⁻⁷ to 10⁻⁴ m as a dielectric in capacitors having self-sealing properties, wherein a high-molecular-weight, thermoplastic, aromatic polycarbonate having an average M_{w} of at least 10,000 and a glass transition temperature of at least 160°C is used as the polycarbonate.

## Revendications

1. Utilisation d'une feuille constituée d'un polycarbonate amorphe à base de 1,1-bis-(4-hydroxyphényl)-3,3,5-triméthylcyclohexane avec une épaisseur de 10⁻⁷ à 10⁻⁴ m comme diélectrique dans des condensateurs avec des caractéristiques d'autogénération, on utilise comme polycarbonate un polycarbonate aromatique, thermoplastique, de poids moléculaire élevé avec un M_{w} moyen d'au moins 10 000 et avec une température de transition vitreuse d'au moins 160°C.
